# EUROPEAN PATENT APPLICATION

(11) **EP 1 936 509 A1**
(43) Date of publication of application: **25.06.2008**
(21) Application number: 06127044.3
(22) Date of filing: 22.12.2006
(51) Int. Cl.: G06F 12/02

(54) **Method and apparatus for updating memory references**

(71) Applicant: TELEFONAKTIEBOLAGET LM ERICSSON (publ), 164 83 Stockholm (SE)
(72) Inventor: Persson, Per, SE-222 70, LUND (SE); Gustafsson, Harald, SE-223 63, LUND (SE)
(74) Representative: Andersson, Björn E.

(57) **Abstract**

A method for updating memory references when moving a block of data elements in a memory. The method comprises storing, in entries (EI-EN) of a table (70), memory references to data elements (90) in the block of data elements (80). For each memory reference, a first base address (B2) and an offset address (02) are stored in the table (70). The first base address (B2) is an address to a reference point in the block of data elements (80). The offset address (02) indicates an address, relative to the reference point, of the data element (90) to which the memory reference points. The method further comprises generating a second base address (B2'), which is the address of said reference point after the move. Moreover, the method comprises replacing, in the table (70), each occurrence of the first base address (B2) with the second base address (B2'). A device for carrying out the method is also disclosed.

## Description

### Technical Field

The present invention relates to a method and an apparatus for updating memory references to data elements stored in a memory.

### Background

When repeatedly allocating and deallocating memory blocks to one or more processes in a data-processing unit, such as a microprocessor, central processing unit (CPU), digital signal processor (DSP), etc, the memory may eventually become fragmented. A fragmented memory is one where allocated blocks are nonadjacent. A large number of unallocated blocks may exist, but these may be too small to be considered by a memory-handling process when requests to allocate a new memory block to a process arrives. This effectively results in a loss of memory capacity since the data-processing unit may be unable to allocate a new block of memory because there is no unallocated continuous range of memory available, which is large enough, even though there may well be a sufficient total amount of unallocated memory available.

To recover memory capacity, a process known as defragmentation may be applied, wherein memory blocks are moved to make free a larger continuous unallocated range of memory.

When a memory block is moved, memory references, such as pointers, to data elements within the block need to be updated to point to the new locations of the data elements. For example, to check whether a specific pointer needs to be updated, the value of the pointer (i.e. the memory address to which the pointer points) may be compared with the original start address and original end address (i.e. start and end addresses before the move) of the memory block that is moved. If the value of the pointer is larger than or equal to the original start address and smaller than or equal to the original end address, the pointer points to a data element within the block that is moved and should therefore be updated. The pointer may be updated by replacing the pointer value with the sum of the pointer value and the difference between the new start address (i.e. the start address after the move) and the original start address of the memory block that is moved. Such updating of pointers is e.g. disclosed in US 5,963,982 with reference to Fig. 5 therein. Due to e.g. the comparisons required to check whether or not a pointer should be updated and the arithmetic operations required for updating the pointer, such pointer updating may be computationally intensive, and therefore inefficient. A more efficient means for updating memory references when moving a block of data elements in a memory would be desirable.

### Summary

It is an object of the present invention to provide efficient means for updating memory references when moving a block of data elements in a memory.

According to a first aspect, there is provided a method for updating memory references when moving a block of data elements in a memory. The method comprises storing, in entries of a table, memory references to data elements in the block of data elements. For each memory reference, a first base address and an offset address are stored in the table. The first base address is an address to a reference point in the block of data elements before the move. The offset address indicates an address, relative to the reference point, of the data element to which the memory reference points. The method further comprises generating a second base address, which is the address of said reference point after the move. Moreover, the method comprises replacing, in the table, each occurrence of the first base address with the second base address.

Storing the first base address may comprise storing the first base address in a first column of the table. Storing the offset address may comprise storing the offset address in a second column of the table.

The step of replacing each occurrence of the first base address with the second base address may comprise, for each entry in the table, comparing the base address stored in the entry of the table with the first base address. If the base address stored in the entry of the table is equal to the first base address, the base address in the entry of the table is replaced with the second base address.

The first column of the table may be stored in a content-addressable memory. The step of replacing each occurrence of the first base address with the second base address may comprise addressing the content-addressable memory with the first base address. Then, the second base address is written to the entries of the content-addressable memory matching the first offset address.

The reference point may be a beginning of the block of data elements.

According to a second aspect, a computer program product comprises computer program code means for executing the method when said computer program code means are run by an electronic device having computer capabilities.

According to a third aspect, a computer readable medium has stored thereon a computer program product comprising computer program code means for executing the method when said computer program code means are run by an electronic device having computer capabilities.

According to a fourth aspect, a pointer-updating unit for updating memory references when moving a block of data elements in a memory is provided. The pointer-updating unit comprises a storing unit adapted to store, in entries of a table, memory references to data elements in the block of data elements. For each memory reference, the pointer-updating unit is adapted to store a first base address and an offset address in the table. The first base address is an address to a reference point in the block of data elements before the move. The offset address indicates an address, relative to the reference point, of the data element to which the memory reference points. The pointer-updating unit further comprises a base-address generation unit adapted to generate a second base address, which is the address of said reference point after the move. Moreover, the pointer-updating unit comprises a base-address replacement unit adapted to replace, in the table, each occurrence of the first base address with the second base address.

The storing unit may be adapted to store the first base address in a first column of the table and the offset address in a second column of the table.

The base-address replacement unit may be adapted to, for each entry in the table, compare the base address stored in the entry of the table with the first base address. The base-address replacement unit may further be adapted to, if the base address stored in the entry of the table is equal to the first base address, replace the base address in the entry of the table with the second base address.

The storing unit may comprise a content-addressable memory adapted to store the first column of the table. The base-address replacement unit may be adapted to address the content-addressable memory with the first base address, and write the second base address to the entries of the content-addressable memory matching the first base address.

The reference point may be a beginning of the block of data elements.

According to a fifth aspect, a data-processing unit comprises the pointer-updating unit.

According to a sixth aspect, an electronic apparatus comprises the pointer-updating unit. The electronic apparatus may be, but is not limited to, any of a portable or handheld mobile radio communication equipment, a mobile radio terminal, a mobile telephone, a pager, a communicator, an electronic organizer, a smartphone and a computer.

Further embodiments of the invention are defined in the dependent claims.

It should be emphasized that the term "comprises/comprising" when used in this specification is taken to specify the presence of stated features, integers, steps, or components, but does not preclude the presence or addition of one or more other features, integers, steps, components, or groups thereof.

### Brief Description of the Drawings

Further objects, features and advantages of the invention will appear from the following detailed description of the invention, reference being made to the accompanying drawings, in which:
Fig. 1 is a block diagram of a data-processing unit according to an embodiment;
Fig. 2 is a block diagram of a pointer-updating unit according to an embodiment;
Fig. 3 illustrates schematically a move of a block of data elements in a memory according to an example;
Fig. 4 is a block diagram of a processor core according to an embodiment; and
Fig. 5 is a flow chart of a method for updating pointers according an embodiment.

### Detailed Description

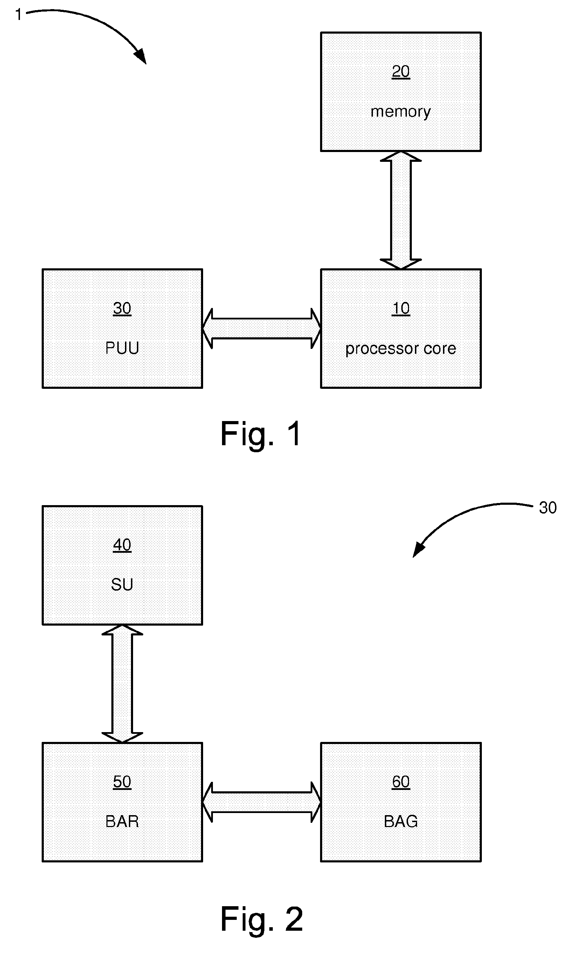

Fig. 1 is a block diagram of a data-processing unit 1 according to an embodiment. The data-processing unit 1 may e.g. be, but is not limited to, a digital signal processor (DSP), a central processing unit (CPU) or a coprocessor adapted to extend instruction set and/or accelerate the performance of a DSP or a CPU.

According to the embodiment, the data-processing unit 1 comprises a processor core 10, a memory 20, and a pointer-updating unit (PUU) 30. The processor core 10 may e.g. comprise functional units such as an arithmetic-logic unit (ALU), registers, address generators, program controllers, etc. The memory 20 may e.g. be a read/write memory, such as but not limited to a random-access memory (RAM).

Throughout this specification, a memory reference, i.e. a reference to a location in a memory, will be referred to as a pointer. The PUU 30 is adapted to update pointers to data elements in the memory 20 when moving a block of data elements in the memory 20. Moving blocks of data elements in the memory 20 may e.g. be performed when a defragmentation process is applied to the memory 20.

A block of data elements may be a continuous sequence of data elements. For example, the data elements in the block of data elements may have consecutive addresses in the memory. As a nonlimiting example, the block of data elements may be a buffer allocated to and associated with a software process. The buffer may e.g. be used for storing input and/or output data for the software process. Alternatively or additionally, the buffer may e.g. be used for storing parameters, such as filter coefficients and the like, for the software process.

Fig. 2 shows a block diagram of the PUU 30 according to an embodiment. According to the embodiment, the PUU 30 comprises a storing unit (SU) 40, a base-address replacement unit (BAR) 50, and a base-address generation unit (BAG) 60.

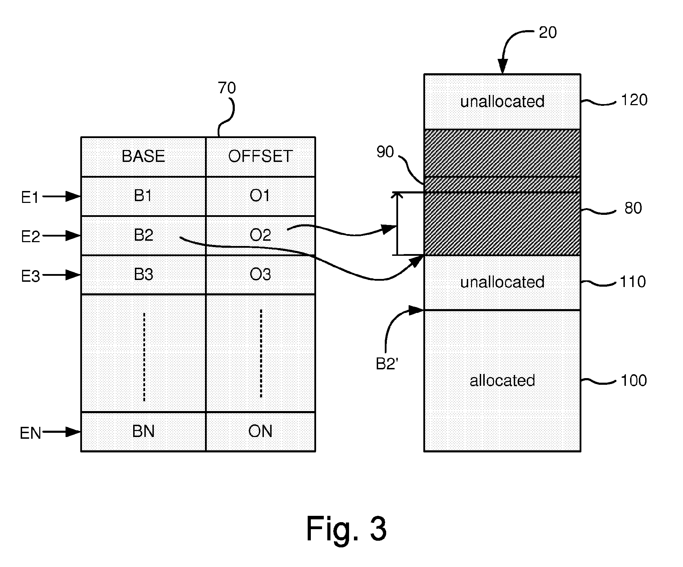

Fig. 3 illustrates schematically a move of a block of data elements in the memory 20 according to an example. The SU 40 (Fig. 2) is adapted to store, in entries E1-EN of a table 70, pointers to data elements in the memory 20. For that purpose, the SU 40 may comprise a dedicated pointer memory (not shown). Alternatively, the SU 40 may utilize a dedicated area in a memory, such as the memory 20, of the data-processing unit 1 for storing the table 70.

For each pointer, the SU 40 is adapted to store a base address B1-BN in the table 70. For example, the base address B1-BN may be stored in a first column of the table 70. The base address is an address to a reference point, or reference position, in the block of data elements. According to the example illustrated in Fig. 3, the base address is an address to the beginning of the block of data elements to which the data elements, pointed to by the pointer, belongs. That is, the base address corresponds to the lowest address of the block of data elements. However, other reference points than the beginning of the block of data elements, such as the end of the block of data elements or a reference point having a predetermined offset from the beginning or the end of the block of data elements, are also possible.

Furthermore, for each pointer, the SU 40 is adapted to store an offset address 01-ON in the table 70. For example, the offset address may be stored in a second column of the table 70. The offset address indicates an address, relative to the base address, to the data element pointed to by the pointer. For example, the memory address to a data element may be the sum of the base address and the offset address.

Hence, each data element of a block of data element may be pointed to by a universal base address, which is specific for each block, and an offset address, which is specific for each data element in the block.

In the example in Fig. 3, a block of data elements 80 (shaded in Fig. 3) is to be moved. The pointer stored in entry E2 of the table 70 points to a data element 90 in the block of data elements. Hence, in this example the base address B2 stored in the entry E2 of the table 70 is the address to the beginning of the block of data elements 80, as indicated by an arrow in Fig. 3. The offset address 02 stored in the entry E2 of the table 70 is the offset address to the data element 90, i.e. the address of the data element 90 relative to the base address B2. That is, the offset address 02 is the difference between the actual address of the data element 90 and the base address B2, as indicated by another arrow in Fig. 3. Pointers to data elements in the block of data elements 80 may also be stored in other entries E1-EN of the table 70 in the same way. Hence, other base addresses B1-BN stored in the table 70 may be equal to the base address B2.

All data elements in the block 80 do not necessarily need to have an associated pointer, but only specific data elements may have a pointer.

Some of the pointers stored in the entries E1-EN of the table 70 may point to another block of data elements than the block 80, and may thus have another base address than B2.

In the example illustrated in Fig. 3, the memory 20 comprises an allocated memory area 100 and two free, or unallocated, memory areas 110, 120, in addition to the block of data elements 80. This is only an example. The memory 20 may comprise more allocated and unallocated memory areas. During e.g. a defragmentation of the memory 20, the block of data elements 80 may be moved to a new base address, e.g. in order to increase the amount of continuous free memory space in the memory 20. For example, the block of data elements 80 may be moved to the new base address B2' adjacent to the allocated memory area 110, as indicated in Fig. 3.

According to an embodiment, the BAG unit 60 (Fig. 2) is adapted to generate the new base address, to which the block of data elements 80 is to be moved. The generation of the new base address may e.g. be performed in accordance with any known memory defragmentation process.

When the block of data elements 80 is moved, pointers to data elements in the block of data elements 80 need to be updated such that they point to the new locations of the data elements.

For this purpose, the BAR unit 50 (Fig. 2) is adapted to replace, in the table 70, each occurrence of the original base address (B2 in the example) with the new base address (B2' in the example). In the embodiment described, all pointers to data elements in the block of data elements that is moved (80 in the example) have the same base address. Therefore, after replacing each occurrence of the original base address with the new base address, all pointers to data elements in the block of data elements that is moved have the correct (new) base address. Furthermore, the relative positions of the data elements in the block of data elements that is moved are unchanged during the move. Therefore, there is no need to update the offset addresses. Hence, by simply replacing each occurrence of the original base address with the new base address, all pointers to data elements in the block of data elements that is moved are correctly updated to point to the new locations of the data elements.

According to an embodiment, the BAR unit 50 is adapted to review the entries E1-EN of the table 70. For each entry E1-EN, the BAR unit 50 is adapted to compare the base address stored in the entry with the original base address of the block of data elements that is moved. Furthermore, the BAR unit 50 is adapted to, if the base address stored in an entry is equal to the original base address, i.e. the base address belongs to the block of data elements being moved, replace that base address in the entry with the new base address.

According to another embodiment, the SU 40 (Fig. 2) comprises a content-addressable memory (CAM, not shown) adapted to store the first column of the table 70. A CAM is a type of memory known in the art, in which a memory element of the memory is addressed by its content instead of the location of the memory element within the memory. In the following, each memory element of the CAM is adapted to store one base address. Hence, in an embodiment where base addresses are represented with K bits, each memory element of the CAM is a K-bit memory element.

For replacing occurrences of the original base address in the table 70, the BAR unit 50 is adapted to address the CAM with the original base address. Thereby, memory elements in the CAM storing the original base address may be accessed for writing. Further, the BAR unit 50 is adapted to write, to the CAM, the new base address. That is, the BAR unit 50 is adapted to write the new base address to the entries of the CAM matching the original base address.

According to an embodiment, all memory elements of the CAM storing the original base address are accessible for writing simultaneously when the CAM is addressed with the original base address. Then, only one writing operation is required for replacing all occurrences of the original base address.

According to another embodiment, only one memory element of the CAM storing the original base address is accessible for writing when the CAM is addressed with the original base address. Then, the CAM needs to be addressed with the original base address and written to iteratively until all occurrences of the original base address have been replaced with the new base address.

The SU 40, BAR unit 50, and BAG unit 60 may be implemented in hardware. Alternatively, at least part of the functionality of the SU 40, BAR unit 50, and/or BAG unit 60 may be implemented with software, e.g. to be executed on the data-processing unit 1 (Fig. 1).

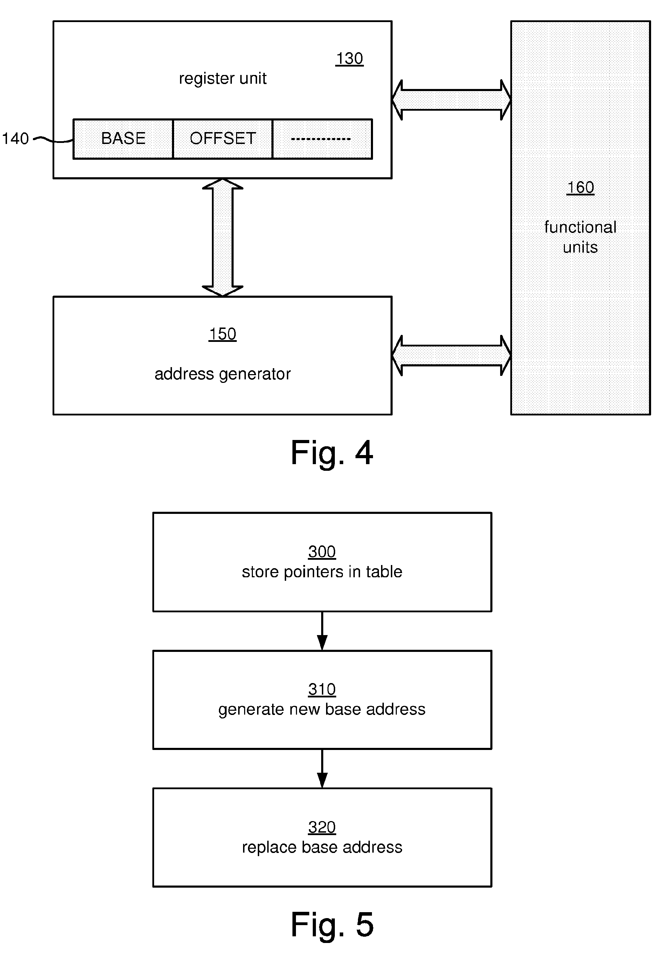

Fig. 4 shows a block diagram of the processor core 10 (Fig. 1) according to an embodiment. The embodiment illustrated in Fig. 4 is only an example. The PUU 30 (Fig. 1) may be operable with other types of processor cores as well. According to the embodiment, the processor core 10 comprises a register unit 130. The register unit 130 comprises one or more registers, e.g. general-purpose registers and/or special purpose registers, such as address registers and/or a program counter register.

According to the embodiment, the processor core 10 further comprises an address generator 150 operatively connected to the register unit 130. The address generator 150 is adapted to generate memory addresses based on register contents of the register unit 130.

Furthermore, the processor core comprises a block of functional units 160 operatively connected to the register unit 130 and the address generator 150. The block of functional units 160 may e.g. comprise one or more ALUs, multiply-accumulate units, butterfly units for performing butterfly computations for e.g. transforms, such as fast Fourier transforms (FFTs), discrete cosine transforms (DCTs), etc., and/or instruction fetch and decode stages, etc.

Pointers to data elements of the memory 20 may be stored in registers of the register unit 130. The pointers may be stored in the form of a base address in a first portion of a register and an offset address in a second portion of the register, as illustrated with the register 140 in Fig. 4. The register 140 may e.g. be a general-purpose register or a special-purpose address register. As above, the base address is the address to a reference position, such as the beginning of a block of memory elements to which the memory element, pointed to by pointer, belongs. The offset address indicates an address, relative to the base address, to the data element pointed to by the pointer. The address generator may be adapted to generate a memory address to the data element pointed to by the pointer by adding the base address and the offset address in response to receiving an instruction therefore from the block of functional units 160 comprised in the processor core. The address generator may be adapted to forward the generated memory address to the block of functional units 160.

The address generator 150 may further be adapted to generate an updated offset address and supply the updated offset address to the register unit 130 for storage in the second portion of the register. This may e.g. be done before (i.e. pre-increment/decrement) or after (i.e. post-increment/decrement) the address generator 150 has generated the memory address. For example, a block of data elements in the memory 20 may be allocated for storage of e.g. a vector or array of elements. An address generator 150 adapted to generate an updated offset address may facilitate to e.g. efficiently loop through all elements of the vector or array. The register 140 may additionally store information (such as an integer) on how much the offset address should be increased or decreased to generate the updated offset address. The address generator 150 may further be adapted to perform a modulo operation on the updated offset address in order to confine the updated offset address within a given range. Information (such as an integer) defining said given range may e.g. be stored in the register 140.

Blocks in the memory 20 may be allocated e.g. to variables associated with software processes running on the data-processing unit 1. A context switch may occur in the data-processing unit 1, e.g. due to an interrupt, subroutine call, or a switch of threads (if the data-processing unit 1 is a multithreading processor). Due to the context switch, a switch of which software process is currently active may occur. The context switch may include storing the content of the registers in the register unit 130, which is associated with the previously active process, e.g. in memory. The context switch may further include fetching, from memory to the registers of the register unit 130, register content associated with new active process. According to an embodiment, the content of registers storing pointers to data elements, such as the register 140 shown in Fig. 4, are stored in and fetched from the SU 40 (Fig. 2) of the PUU 30 (Fig. 1). Representing pointers in the registers of the register unit 130 with a base address and an offset address facilitates the pointer updating of the PUU 30. For example, because the pointers are already represented in an appropriate format (i.e. base address and offset address) for the pointer updating, no transformation to the appropriate format is required before storing the pointers in the SU 40.

Above, embodiments have been disclosed, wherein the memory address to a data element is the sum of the base address and the offset address. However, other addressing modes are applicable within the scope of the invention. For example, the memory address may in some addressing modes be the sum of the base address and a modified offset address, which is derived from the offset address. The address generator 150 may be adapted to generate memory addresses based on the base address and the offset address in a plurality of modes. Which addressing mode to use may be indicated e.g. in an instruction from the block of functional units 160 or by one or more bits in the register 140. As a nonlimiting example, in a bit-reversed addressing mode, the modified offset address may be derived from the offset address by reversing the order of a range of bits in the offset address. Such a bit-reversed addressing mode may be useful e.g. for facilitating FFT computations.

Moreover, the register 140 may store more than one offset address. For example, the register 140 may store separate offset addresses for reading from and writing to the block of data elements associated with the base address. During e.g. a context switch, additional offset addresses and miscellaneous other information stored in the register 140, such as information regarding modulo operations, increments/decrements, addressing modes, etc., may also be stored in additional columns (not shown) of the table 70 (Fig. 3).

According to some embodiments, an electronic apparatus may comprise the PUU 30 (Fig. 1). For example, the electronic apparatus may comprise a data-processing unit, such as the data-processing unit 1 (Fig. 1), that in turn comprises the PUU 30. The electronic apparatus may be, but is not limited to, any of a portable or handheld mobile radio communication equipment, a mobile radio terminal, a mobile telephone, a pager, a communicator, an electronic organizer, a smartphone and a computer.

According to some embodiments, a method for updating pointers when moving a block of data elements in the memory 20 is provided. A flow chart of the method according to an embodiment is shown in Fig. 5.

In step 300, pointers to data elements in the block of data elements are stored in entries of a table, such as the entries E1-EN of the table 70 (Fig. 3). The pointers may e.g. be stored by the SU 40 (Fig. 2). According to the embodiment, the pointers are stored in the table by, for each pointer, storing the original base address and the offset address in the table, as has been described above.

In step 310, the new base address, to which the block of data elements, is to be moved is generated. The new base address may e.g. be generated by the BAG unit 60 (Fig. 2).

In step 320, each occurrence of the original base address in the table is replaced with the new base address. The replacement may e.g. be performed by the BAR unit 50 (Fig. 2).

According to some embodiments, step 320 comprises, for each entry in the table, comparing the base address stored in the entry of the table with the original base address. If the base address stored in the entry of the table is equal to the original base address, the base address in the entry of the table is replaced with the new base address.

According to some embodiments, the first column of the table is stored in a CAM. In these embodiments, step 320 may comprise addressing the CAM with the original base address and writing, to the CAM, the new base address. Thereby, the new base address is written to the entries of the CAM matching the original base address.

The embodiments disclosed herein provides an efficient means for updating pointers when moving a block of data elements in a memory. For example, for each pointer, only the base address stored in the table needs to be compared with the original base address. This results in a considerably lower computational complexity than if e.g. an address indicated by a pointer is compared with a minimum and a maximum address of the block of data elements to check if the pointer points to a data element within the block of data elements. Further, since the occurrences of the original base address in the table are simply replaced with the new base address, no addition or subtraction operations are needed. Moreover, since all pointers to a block of data elements use the same universal base address, all pointers to that block are found by searching for said universal base address.

The invention may be embedded in a computer program product, which enables implementation of the method and functions described herein. The invention may be carried out when the computer program product is loaded an run in a system having computer capabilities. Computer program, software program, program product, or software, in the present context mean any expression, in any programming language, code or notation, of a set of instructions intended to cause a system having a processing capability to perform a particular function directly or after conversion to another language, code or notation.

The present invention has been described above with reference to specific embodiments. However, other embodiments than the above described are possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A method for updating memory references when moving a block of data elements (80) in a memory (20), the method comprising
storing, in entries (E1-EN) of a table (70), memory references to data elements (90) in the block of data elements (80) by, for each memory reference,
- storing a first base address (B2), which is an address to a reference point of the block of data elements (80) before the move; and
- storing an offset address (02), indicating an address, relative to the reference point, of the data element (90) to which the memory reference points;
generating a second base address (B2'), which is the address of said reference point after the move; and
replacing, in the table (70), each occurrence of the first base address (B2) with the second base address (B2').

2. The method according to claim 1, wherein storing the first base address (B2) comprises storing the first base address (B2) in a first column of the table (70); and storing the offset address (02) comprises storing the offset address (02) in a second column of the table (70).

3. The method according to any of the claims 1-2, wherein the step of replacing comprises, for each entry (E1-EN) in the table (70),
comparing the base address stored in the entry of the table with the first base address (B2); and
if the base address stored in the entry of the table is equal to the first base address (B2), replacing the base address in the entry of the table with the second base address (B2').

4. The method according to claim 2, wherein the first column of the table (70) is stored in a content-addressable memory and the step of replacing comprises
addressing the content-addressable memory with the first base address (B2); and
writing the second base address (B2') to the entries of the content-addressable memory matching the first base address (B2).

5. The method according to any of the preceding claims, wherein said reference point is a beginning of the block of data elements.

6. A computer program product comprising computer program code means for executing the method according to any of claims 1 to 5, when said computer program code means are run by an electronic device having computer capabilities.

7. A computer readable medium having stored thereon a computer program product comprising computer program code means for executing the method according to any of claims 1 to 5, when said computer program code means are run by an electronic device having computer capabilities.

8. A pointer-updating unit (30) for updating memory references when moving a block of data elements (80) in a memory (20), wherein the pointer-updating unit (30) comprises
a storing unit (40) adapted to store, in entries (E1-EN) of a table (70), memory references to data elements (90) in the block of data elements (80) by, for each memory reference,
- storing a first base address (B2), which is an address to a reference point in the block of data elements (80) before the move; and
- storing an offset address (02), indicating an address relative to the reference point, of the data element (90) to which the memory reference points;
a base-address generation unit (60) adapted to generate a second base address (B2'), which is the address of said reference point after the move; and
a base-address replacement unit (50) adapted to replace, in the table (70), each occurrence of the first base address (B2) with the second base address (B2').

9. The pointer-updating unit (30) according to claim 8, wherein the storing unit (40) is adapted to store the first base address in a first column of the table (70) and the offset address (02) in a second column of the table (70).

10. The pointer-updating unit (30) according to any of the claims 8-9, wherein the base-address replacement unit (50) is adapted to, for each entry (E1-EN) in the table (70),
compare the base address stored in the entry of the table (70) with the first base address (B2); and
if the base address stored in the entry of the table (70) is equal to the first base address (B2), replace the base address in the entry of the table (70) with the second base address (B2').

11. The pointer-updating unit (30) according to claim 9, wherein the storing unit (40) comprises a content-addressable memory adapted to store the first column of the table (70), and the base-address replacement unit (50) is adapted to
address the content-addressable memory with the first base address (B2); and
write the second base address (B2') to the entries of the content-addressable memory matching the first base address (B2).

12. The pointer-updating unit (30) according to any of the claims 8-11, wherein said reference point is a beginning of the block of data elements.

13. A data-processing unit (1) comprising a pointer-updating unit (30) according to any of the claims 8-12.

14. An electronic apparatus comprising a pointer-updating unit (30) according to any of the claims 8-12.

15. The electronic apparatus according to claim 14, wherein the electronic apparatus is a portable or handheld mobile radio communication equipment, a mobile radio terminal, a mobile telephone, a pager, a communicator, an electronic organizer, a smartphone or a computer.
